(19) Europäisches Patentamt
European Patent Office
Office européen des brevets

(11) **EP 4 443 587 A1**

(12) **EUROPEAN PATENT APPLICATION**
published in accordance with Art. 153(4) EPC


(43) Date of publication:
**09.10.2024 Bulletin 2024/41**

(21) Application number: **23883011.1**

(22) Date of filing: **20.10.2023**

(51) International Patent Classification (IPC):
***H01M 10/0565*** *(2010.01)* ***H01M 4/62*** *(2006.01)*
***H01M 10/0564*** *(2010.01)* ***H01M 10/052*** *(2010.01)*
***C08L 83/04*** *(2006.01)* ***C08K 5/00*** *(2006.01)*
***C08J 5/22*** *(2006.01)*

(52) Cooperative Patent Classification (CPC):
**C08J 5/22; C08K 5/00; C08L 83/04; H01M 4/62; H01M 10/052; H01M 10/0564; H01M 10/0565**

(86) International application number:
**PCT/KR2023/016325**

(87) International publication number:
**WO 2024/090905 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022 KR 20220137997**
**25.10.2022 KR 20220138008**
**25.10.2022 KR 20220138012**



(71) Applicant: **LG Energy Solution, Ltd.**
**Seoul 07335 (KR)**

(72) Inventors:
- **LEE, Jung Pil**
**Daejeon 34122 (KR)**
- **NAM, Sunghyun**
**Daejeon 34122 (KR)**
- **MOK, Eunkyung**
**Daejeon 34122 (KR)**
- **KIM, Jiyoung**
**Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**


(54) **POLYMER SOLID ELECTROLYTE AND ALL-SOLID-STATE BATTERY COMPRISING SAME**


(57) One aspect or the invention relates to a polymeric solid electrolyte and an all-solid-state battery comprising the same, and more particularly, to a polymeric solid electrolyte having simultaneously improved safety and ionic conductivity due to a crosslinking structure formed by crosslinking between crosslinkable functional groups contained in a polyhedral oligomeric silsesquioxane and/or solid crosslinking agents.


[FIG. 1]

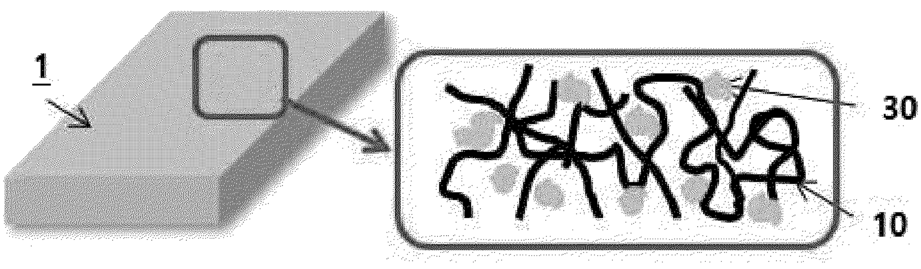





Processed by Luminess, 75001 PARIS (FR)

## Description

[Technical Field]

The present application claims the benefit and priority to Korean Patent Application No. 10-2022-0138008, filed October 25, 2022, Korean Patent Application No. 10-2022-0138012, filed October 25, 2022, and Korean Patent Application No. 10-2022-0137997, filed October 25, 2022, the disclosure of which is incorporated herein by reference in its entirety.

One aspect of the disclosure relates to a polymeric solid electrolyte and all-solid-state battery comprising the same.

[Related Art]

In lithium rechargeable batteries using liquid electrolytes, the negative electrode and positive electrode are separated by a separating film, and if the separating film is damaged due to deformation or external impact, a short circuit can occur, which can lead to overheating or explosion. Therefore, the development of a solid electrolyte that can secure safety in the field of lithium secondary batteries is a very important task.

Lithium secondary batteries using solid electrolytes have the advantages of increased safety, improved reliability by preventing leakage of electrolyte, and easy production of thin batteries. In addition, the energy density can be improved by using lithium metal as the negative electrode, and they are expected to be applied to high-capacity secondary batteries for electric vehicles in addition to small-sized secondary batteries, so they are drawing attention as a next-generation battery.

Among solid electrolytes, ionic conductive polymeric materials can be used as raw materials for polymeric solid electrolytes, and hybrid materials that are a mixture of polymeric materials and inorganic materials have also been proposed. Inorganic materials such as oxides or sulfides can be used as inorganic materials.

These conventional polymeric solid electrolytes are prepared through a process of forming a coating film followed by high temperature drying. However, the conventional polymer solid electrolyte manufacturing technology is limited by the high crystallinity of crystalline polymers or semi-crystalline polymers, which makes it difficult to manufacture polymer solid electrolytes with improved ionic conductivity.

Therefore, there is a continuous need to develop a polymeric solid electrolyte with both safety and ionic conductivity.

[Prior Art References]

[Patent Literature]

Korean Patent Publication No. 2017-0046995

[Detailed Description of the Invention]

[Technical Problem]

The present inventors have conducted multifaceted research to solve the above problem, and have confirmed that (A) the safety and ionic conductivity of a polymeric solid electrolyte prepared by a curing process using a liquid polyhedral oligomeric silsesquioxane (POSS) containing a crosslinkable functional group (CFG) and a lithium salt as raw materials were simultaneously improved.

In addition, the present inventors have confirmed that (B) the safety and ionic conductivity of a polymeric solid electrolyte prepared by a curing process using a polyhedral oligomeric silsesquioxane (POSS) containing a crosslinkable functional group (CFG) (CFG-POSS); a liquid polyethyleneglycol-polyhedral oligomeric silsesquioxane (POSS); and a lithium salt as raw materials were simultaneously improved.

Furthermore, the present inventors have confirmed that the safety and ionic conductivity of a polymeric solid electrolyte that has undergone a curing process using a liquid polyhedral oligomeric silsesquioxane (POSS); a solid crosslinking agent; and a lithium salt as raw materials were simultaneously improved.

Accordingly, it is an object of the present invention to provide a polymeric solid electrolyte with good safety and ionic conductivity.

Another object of the present invention is to provide an all-solid-state battery comprising a polymeric solid electrolyte with improved safety and ionic conductivity.

Another object of the present invention is to provide a battery module comprising the all-solid-state battery.

[Technical Solution]

To accomplish the above objectives, the present invention provides a polymeric solid electrolyte comprising (A), (B) or (C) below,

wherein the polymeric solid electrolyte comprising (A) or (B) has a crosslinking structure formed by crosslinking between the crosslinkable functional groups,
wherein the polymeric solid electrolyte comprising (C) has a crosslinking structure formed by a solid crosslinking agent:

(A) a polyhedral oligomeric silsesquioxane (POSS) containing a crosslinkable functional group (CFG), and a lithium salt;
(B) a polyhedral oligomeric silsesquioxane (POSS) containing a crosslinkable functional group (CFG) (CFG-POSS); a liquid polyhedral oligomeric silsesquioxane (POSS); and a lithium salt; and
(C) a liquid polyethyleneglycol-polyhedral oligomeric silsesquioxane (POSS); a solid crosslinking agent; and a lithium salt.

In one embodiment of the present invention, the crosslinkable functional group in (A) may comprise one or more selected from the group consisting of glycidyl (GL) and acrylo (AC).
In one embodiment of the present invention, the polyhedral oligomeric silsesquioxane comprising the crosslinkable functional group in (A) may be included in an amount of 50% by weight to 95% by weight, based on the total weight of the polymeric solid electrolyte.
In one embodiment of the present invention, the lithium salt of step (A) may be comprised in an amount of 5% by weight to 50% by weight based on the total weight of the polymeric solid electrolyte.
In one embodiment of the present invention, the crosslinkable functional group (CFG) of (B) may comprise one or more selected from the group consisting of glycidyl (GL), acrylo (AC), allyl (AL), and methacryl (MA).
In one embodiment of the present invention, the weight ratio of polyhedral oligomeric silsesquioxane comprising the crosslinkable functional group (CFG-POSS) to polyhedral oligomeric silsesquioxane (POSS) in (B) (CFG-POSS : POSS) may be 0.05 : 1 to 1.5 : 1.
In one embodiment of the present invention, the polyhedral oligomeric silsesquioxane (CFG-POSS) comprising the crosslinkable functional group in (B) may be included in an amount of 20 to 50% by weight based on the total weight of the polymeric solid electrolyte.
In one embodiment of the present invention, the polyhedral oligomeric silsesquioxane (POSS) in (B) may be comprised in an amount of 20 to 50% by weight based on the total weight of the polymeric solid electrolyte.
In one embodiment of the present invention, the lithium salt of (B) may be comprised in an amount of 10 to 40% by weight based on the total weight of the polymeric solid electrolyte.
In one embodiment of the present invention, the solid crosslinking agent of (C) may comprise one or more selected from the group consisting of poly(ethylene glycol) diacrylate (PEGDA), poly(ethylene glycol) dimethacrylate (PEGDMA), poly(ethylene glycol), and poly(ethylene glycol) divinyl ether (PEGDVE).
In one embodiment of the present invention, the liquid polyhedral oligomeric silsesquioxane (POSS) in (C) may be comprised in an amount of 20 to 60% by weight, based on the total weight of the polymeric solid electrolyte.
In one embodiment of the present invention, the solid crosslinking agent of (C) may be comprised in an amount of 20 to 60% by weight, based on the total weight of the polymeric solid electrolyte.
In one embodiment of the present invention, the lithium salt of (C) may be comprised in an amount of 10 to 30% by weight based on the total weight of the polymeric solid electrolyte.
In one embodiment of the present invention, the polymeric solid electrolyte may be in the form of a freestanding film.
In one embodiment of the present invention, the polymeric solid electrolyte may further comprise a liquid electrolyte.
The present invention also provides an all-solid-state battery comprising a polymeric solid electrolyte.
In one embodiment of the present invention, the all-solid-state battery comprises a positive electrode layer, a negative electrode layer, and a solid electrolyte layer formed between the positive electrode layer and the negative electrode layer, wherein at least one of the positive electrode layer, negative electrode layer, and solid electrolyte layer may comprise the polymeric solid electrolyte.
The present invention also provides a battery module comprising an all-solid-state battery.

[Advantageous Effects]

The polymeric solid electrolyte according to the present invention has a crosslinking structure formed by a polyhedral oligomeric silsesquioxane containing crosslinkable functional groups and/or a solid crosslinking agent, which can prevent leakage or volatilization and exhibits excellent safety and ionic conductivity.

[Brief Description of Drawing]

FIG. 1 is a schematic diagram illustrating the internal structure of a polymeric solid electrolyte (A) according to one embodiment of the present invention.
FIG. 2 is a schematic diagram illustrating the internal structure of a polymeric solid electrolyte (B) according to one embodiment of the present invention.
FIG. 3 is a schematic illustrating the internal structure of a polymeric solid electrolyte (C) according to one embodiment of the present invention.

[Best Mode for Practicing the Invention]

Hereinafter, the detail of the present invention is provided to facilitate an understanding of the present invention.
The terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention.
As used herein, the term "crosslinkable functional group" means a functional group capable of forming crosslinks between the functional groups in the form of a three-dimensional network to form a crosslinking structure.
As used herein, the term "crosslinking structure" refers to a structure comprising a three-dimensional framework formed by crosslinking between functional groups contained in a liquid polyhedral oligomeric silsesquioxane and/or a solid crosslinking agent, and an internal space formed within the framework. The internal space may comprise a free volume.

**Polymeric solid electrolyte**

The present invention relates to a polymeric solid electrolyte.
The polymeric solid electrolyte according to the present invention comprises (A), (B) or (C) below,

wherein the polymeric solid electrolyte comprising (A) or (B) has a crosslinking structure formed by crosslinking between the crosslinkable functional groups,
wherein the polymeric solid electrolyte comprising (C) has a crosslinking structure formed by a solid crosslinking agent:

(A) a polyhedral oligomeric silsesquioxane (POSS) containing a crosslinkable functional group (CFG), and a lithium salt;
(B) a polyhedral oligomeric silsesquioxane (POSS) containing a crosslinkable functional group (CFG) (CFG-POSS); a liquid polyhedral oligomeric silsesquioxane (POSS); and a lithium salt; and
(C) a liquid polyethyleneglycol-polyhedral oligomeric silsesquioxane (POSS); a solid crosslinking agent; and a lithium salt.

Hereinafter, the polymeric solid electrolyte comprising (A), (B) or (C) is categorized as polymeric solid electrolyte (A), polymeric solid electrolyte (B), and polymeric solid electrolyte (C), and each of them is described in detail as below.

**[Polymeric solid electrolyte (A)]**

<u>(1) Polymeric solid electrolyte (A)</u>

The present invention relates to a polymeric solid electrolyte (A).
The polymeric solid electrolyte (A) according to the present invention includes a polyhedral oligomeric silsesquioxane (POSS) comprising a crosslinkable functional group (CFG) (CFG-POSS), and a lithium salt. The CGF-POSS is liquid at room temperature and therefore liquid in a raw material state, but upon heat treatment in a polymeric solid

electrolyte, it exhibits a crosslinking structure due to crosslinking between functional groups.

Further, the polymeric solid electrolyte has a crosslinking structure formed by crosslinking between the crosslinkable functional groups. The lithium salt may exist in a dissociated state in a free volume, which is the internal space of the crosslinking structure.

The POSS itself has the shape of a cage. Since the cage is a three-dimensional structure including a free volume, it may be a type of crosslinking structure in the form of a three-dimensional network. The crosslinkable functional group may be an end group bonded to an end of the POSS. By crosslinking between the crosslinkable functional groups that are end groups of the POSS, a crosslinking structure including a free volume may be formed. Further, the crosslinking structure may include a cage structure of the POSS itself.

In addition, the free volume may provide space for the solid electrolyte chains to move, which may also improve ionic conductivity.

In the present invention, the polyhedral oligomeric silsesquioxane (POSS) may be represented by the formula 1 below:

[Formula 1]

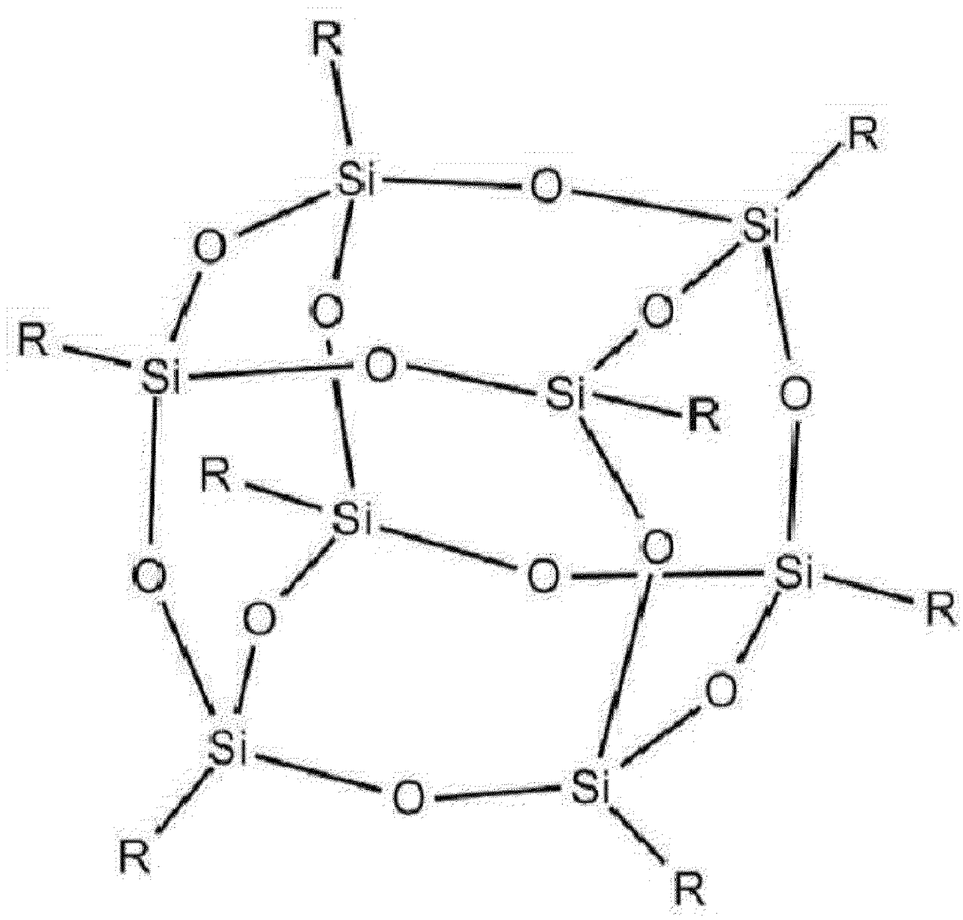

In Formula 1,

R is selected from the group consisting of groups that are the same or different from each other, and each independently represented by the following formulae 1-1 to 1-4:

[Formula 1-1]

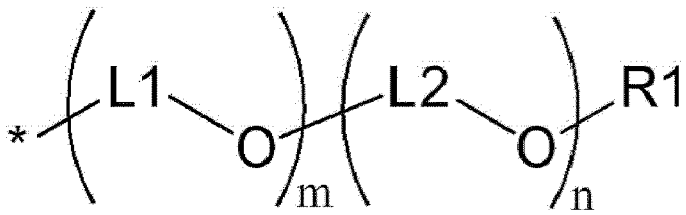

[Formula 1-2]

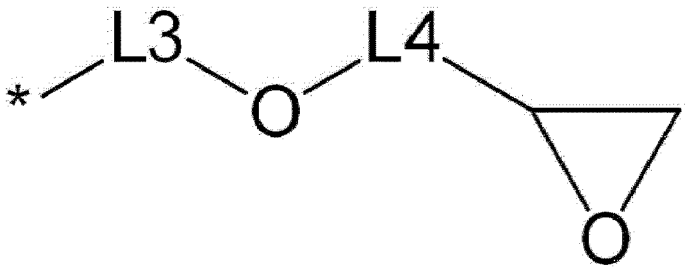

[Formula 1-3]

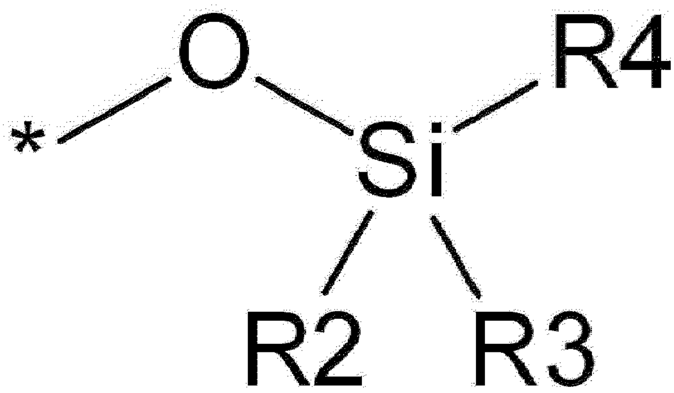

[Formula 1-4]

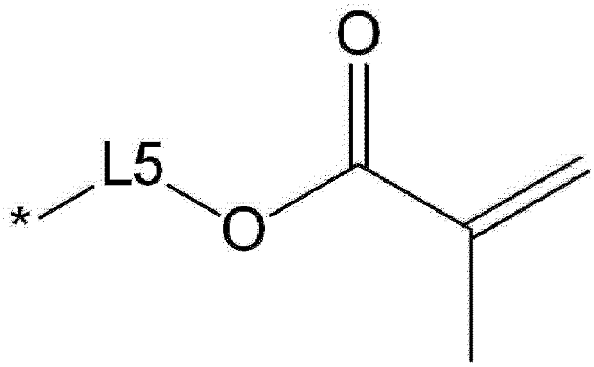

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2

to 30 carbon atoms; an alkoxyl group having 1 to 30 carbon atoms; and a carboxyl group having 1 to 30 carbon atoms, m and n are equal to or different from each other, and each is an integer of 0 to 10 independently, and the * is the bonding position.

Furthermore, in Formulae 1-1 to 1-4, L1 to L5 are an alkylene group having 1 to 10 carbon atoms, R1 to R4 are hydrogen; a hydroxyl group; or an alkyl group having 1 to 30 carbon atoms, and m and n are the same or different from each other, each independently an integer of 0 to 10.

Further, in Formula 1, R is selected from the group consisting of a polyethylene glycol group, a glycidyl group, an octasilane group and a methacrylic group.

FIG. 1 is a schematic diagram illustrating the internal structure of a polymeric solid electrolyte (A) according to one embodiment of the present invention.

Referring to FIG. 1, the polymeric solid electrolyte (1) has a crosslinking structure formed by crosslinking between functional groups included in the polyhedral oligomeric silsesquioxane (CFG-POSS) (10) comprising crosslinkable functional groups, and an internal space included in the crosslinking structure. The internal space may refer to a free volume. The lithium salt (30) may be included in the internal space in a dissociated state.

The crosslinkable functional group is not particularly limited, provided that it has the property of forming crosslinks by a curing process using heat or light. For example, the crosslinkable functional group may comprise one or more selected from the group consisting of glycidyl and acrylo. The glycidyls may have a stronger propensity to bind to each other upon heat treatment and/or light treatment, which may be more favorable for the crosslinking structure by crosslinking. Preferably, the crosslinks may indicate thermally crosslinked glycidyls.

The strength of the crosslinks can determine the degree to which the polymer chains in the polymeric solid electrolyte can move. Therefore, the crosslinks should be bonded with a sufficient strength to allow the polymer chains to move so that the solid electrolyte membrane can exhibit high ionic conductivity while maintaining its strength. If the strength of the crosslinking is too high, the movement of the polymer chains may not be smooth and there may not be enough space for the ions to move, resulting in low ionic conductivity. On the other hand, if the strength of the crosslinking is too low, the processability of the all-solid-state battery may be reduced and leakage may occur.

Furthermore, the polyhedral oligomeric silsesquioxane (CFG-POSS) comprising the crosslinkable functional groups may be included in an amount of 50% by weight to 95% by weight based on the total weight of the polymeric solid electrolyte, more specifically, it may be included in an amount of at least 50% by weight, at least 60% by weight, or at least 65% by weight, or at most 91 % by weight, at most 93% by weight, or at most 95% by weight. If the content of CFG-POSS is less than 50% by weight, a polymeric solid electrolyte cannot be formed, and if it is greater than 95% by weight, the ionic conductivity increases, but the strength may decrease or it may become liquid and difficult to form a solid electrolyte.

Further, the crosslinkable functional group (CFG) may be comprised in an amount of 10 to 20% by weight, based on the total weight of the polyhedral oligomeric silsesquioxane (CFG-POSS) comprising the crosslinkable functional groups. Specifically, the content of the crosslinkable functional group (CFG) may be 10% by weight or more, 11% by weight or more, 12% by weight or more, or 18% by weight or less, 19% by weight or less, or 20% by weight or less. If the content of the crosslinkable functional groups (CFG) is less than 10% by weight, it may be difficult to form a solid electrolyte due to insufficient crosslinking between the functional groups, and if the content is greater than 20% by weight, the crosslinking between the functional groups may be increased, and strength may be secured, but chain mobility of the polymer chain may be reduced, and ionic conductivity may be reduced.

In the present invention, the lithium salt is included in the internal space of the crosslinking structure in a dissociated state, which can improve the ionic conductivity of the polymeric solid electrolyte.

The lithium salt may include one or more selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

Furthermore, the lithium salt may be comprised in an amount of 5% by weight to 50% by weight based on the total weight of the polymeric solid electrolyte, more specifically, it may be comprised in an amount of more than 5% by weight, more than 7% by weight, or more than 9% by weight, or it may be comprised in an amount of less than 30% by weight, less than 40% by weight, or less than 50% by weight. If the lithium salt content is less than 5% by weight, the amount of dissociated lithium ions may be low, resulting in a lower ionic conductivity, and if it is greater than 50% by weight, the lithium salt may not be sufficiently dissociated, also resulting in a lower ionic conductivity.

In the present invention, the polymeric solid electrolyte may be in the form of a free-standing film or in the form of a coating layer. The free-standing film refers to a film that has a certain strength at normal temperature and pressure and can maintain a film form by itself without a separate support. The coating layer means a layer obtained by coating the substrate.

The freestanding film or coating layer has the property of being a support that stably contains lithium ions, and

thus may be in a form suitable as a polymeric solid electrolyte.

In the present invention, the polymeric solid electrolyte may further comprise a liquid electrolyte, wherein the liquid electrolyte may further enhance the ionic conductivity of the polymeric solid electrolyte. The liquid electrolyte may also be contained in the internal space of the crosslinking structure.

The liquid electrolyte may be any liquid electrolyte conventionally used in the art, and the composition of the liquid electrolyte is not particularly limited as long as it is one that can be used in a lithium secondary battery. For example, the liquid electrolyte may comprise a lithium salt and a non-aqueous solvent. The lithium salt may be one of the lithium salts as described above. Further, the non-aqueous solvent may include one or more selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN), and sulfolane.

Further, the liquid electrolyte may be comprised in an amount of 1 to 5% by weight based on the total weight of the polymeric solid electrolyte. If the content of the liquid electrolyte is 1% by weight or less, the effect of improving ionic conductivity may be negligible, and if it is more than 5% by weight, the stability may be reduced.

(2) Preparation method of polymeric solid electrolyte (A)

The present invention also relates to a method of preparing a polymeric solid electrolyte (A), the method comprising (S1) adding a lithium salt to a liquid polyhedral oligomeric silsesquioxane (POSS) (CFG-POSS) comprising crosslinkable functional groups to form a solution for forming a polymeric solid electrolyte; (S2) applying the solution for forming a polymeric solid electrolyte to a substrate to form a coating film; and (S3) curing the coating film.

Hereinafter, a method for preparing a solid electrolyte (A) according to the present invention is described in more detail by each step.

In the present invention, in step (S1), a lithium salt may be added to a liquid polyhedral oligomeric silsesquioxane (POSS) (CFG-POSS) comprising a crosslinkable functional group (CFG) to form a solution for forming a polymeric solid electrolyte. The type and content of the polyhedral oligomeric silsesquioxane containing the crosslinkable functional groups (CFG-POSS) and the lithium salt are as described above.

A lithium salt can be added and stirred to a liquid polyhedral oligomeric silsesquioxane (CFG-POSS) comprising the crosslinkable functional groups to form a solution for the formation of a polymeric solid electrolyte.

Furthermore, since the polyhedral oligomeric silsesquioxane (CFG-POSS) comprising the crosslinkable functional groups exists in a liquid phase at room temperature, the lithium salt can be added to the liquid POSS to dissociate the lithium salt, but additional solvent can be added to increase the amount of dissociated lithium salt.

The solvent is not particularly limited as long as it is a solvent capable of dissociating the lithium salt in a liquid polyhedral oligomeric silsesquioxane (CFG-POSS) comprising the crosslinkable functional groups. For example, the solvent may be one or more selected from the group consisting of dimethylsulfoxide (DMSO), isopropyl alcohol, N-Methyl-2-pyrrolidone (NMP), acetone, xylene, N,N-dimethylmethanamide (DMF), benzene, tetrahydrofuran (THF), and water. The amount of the solvent can be adjusted in consideration of the application thickness of the coating layer, or the properties of the solid electrolyte to be prepared.

In the present invention, in step (S2), the solution for forming the polymeric solid electrolyte may be applied to the substrate to form a coating film.

The substrate is not particularly limited, provided that it can serve as a support on which the solution for forming the polymeric solid electrolyte is applied. For example, the substrate may be stainless use steel (SUS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-acrylic acid ethyl copolymer film, ethylene-acrylic acid methyl copolymer film, or polyimide film.

Furthermore, the application method is not particularly limited if it is a method by which the solution for forming a polymeric solid electrolyte can be applied in the form of a film on the substrate. For example, the application method may be bar coating, roll coating, spin coating, slit coating, die coating, blade coating, comma coating, slot die coating, lip coating, or solution casting.

In the present invention, in the step (S3), the coating film may be cured. By the curing process, crosslinking between the crosslinkable functional groups may be induced to form a crosslinking structure.

The curing can be thermal or light curing.

The thermal curing may be heat treating by applying a temperature of 80°C to 200°C. Specifically, the heat treatment temperature may be 80°C or more, 90°C or more, or 100°C or more, or 160°C or less, 180°C or less, or 200°C or less. If the heat treatment temperature is below 80°C, the crosslinks may not be sufficiently formed, and if the heat treatment temperature is above 200°C, the polymer solid electrolyte may be excessively hardened, resulting in a decrease in ionic conductivity, or the formed film may be damaged by heat.

Further, the light curing may be performed using ultraviolet rays (UV) or electron beams.

**[Polymeric solid electrolyte (B)]**

(1) Polymeric solid electrolyte (B)

The present invention relates to a polymeric solid electrolyte (B).

The polymeric solid electrolyte (B) according to the present invention includes a polyhedral oligomeric silsesquioxane (POSS) comprising a crosslinkable functional group (CFG) (CFG-POSS); a liquid polyhedral oligomeric silsesquioxane (POSS); and a lithium salt.

Further, the polymeric solid electrolyte has a crosslinking structure formed by crosslinking between the crosslinkable functional groups. The lithium salt may be present in a dissociated state in a free volume, which is the internal space of the crosslinking structure. Further, the liquid polyhedral oligomeric silsesquioxane (POSS) may also be included in the free volume. The crosslinking structure can improve safety by preventing leakage or volatilization, while also improving ionic conductivity by acting as a transport channel for lithium ions. The free volume can also provide space for the solid electrolyte chains to move, which can improve ionic conductivity.

FIG. 2 is a schematic diagram illustrating the internal structure of a polymeric solid electrolyte (B) according to one embodiment of the present invention.

Referring to FIG. 2, the polymeric solid electrolyte (1) has a crosslinking structure formed by crosslinking between functional groups included in the polyhedral oligomeric silsesquioxane (CFG-POSS) (10) comprising crosslinkable functional groups, and an internal space included in the crosslinking structure. The internal space may refer to a free volume. A liquid polyhedral oligomeric silsesquioxane (POSS) (20) may be included in the internal space, and a lithium salt (not shown in the drawing) may be included in the internal space in a dissociated state.

The crosslinkable functional group is not particularly limited, provided that it has the property of forming crosslinks by a curing process using heat or light. For example, the crosslinkable functional groups may comprise one or more selected from the group consisting of glycidyl, methacryl, allyl, and acrylo. The glycidyls may have a stronger propensity to bind to each other upon heat treatment and/or light treatment, which may be more favorable for the formation of a crosslinked structure by crosslinking. Preferably, the crosslinks may indicate thermally crosslinked glycidyls.

The strength of the crosslinks can determine the degree to which the polymer chains in the polymeric solid electrolyte can move. Therefore, the crosslinks should be bonded with a sufficient strength to allow the polymer chains to move so that the solid electrolyte membrane can exhibit high ionic conductivity while maintaining its strength. If the strength of the crosslinking is too high, the movement of the polymer chains may not be smooth and it may not be easy to secure space for ions to move, resulting in low ionic conductivity. On the other hand, if the strength of the crosslinking is too low, the processability of the all-solid-state battery may be reduced and leakage may occur.

Furthermore, the polyhedral oligomeric silsesquioxane (CFG-POSS) comprising the crosslinkable functional groups may be included in an amount of 20% by weight to 50% by weight based on the total weight of the polymeric solid electrolyte, more specifically, it may be included in an amount of 20% by weight or more, 25% by weight or more, or 30% by weight or more, or 40% by weight or less, 45% by weight or less, or 50% by weight or less. When the content of the POSS is less than 20% by weight, a polymeric solid electrolyte cannot be formed, and when the content is greater than 50% by weight, the content of the lithium salt can be relatively increased, resulting in a decrease in ionic conductivity.

Further, the crosslinkable functional group (CFG) may be comprised in an amount of 10 to 20% by weight, based on the total weight of the polyhedral oligomeric silsesquioxane (CFG-POSS) comprising the crosslinkable functional groups. Specifically, the content of the crosslinkable functional group (CFG) may be 10% by weight or more, 11% by weight or more, 12% by weight or more, or 18% by weight or less, 19% by weight or less, or 20% by weight or less. If the content of the crosslinkable functional groups (CFG) is less than 10% by weight, it may be difficult to form a solid electrolyte due to insufficient crosslinking between the functional groups, and if the content is greater than 20% by weight, the crosslinking between the functional groups may be increased, and strength may be secured, but chain mobility of the polymer chain may be reduced, and ionic conductivity may be reduced.

In the present invention, the liquid polyhedral oligomeric silsesquioxane (POSS) may be represented by formula 1 below:

[Formula 1]

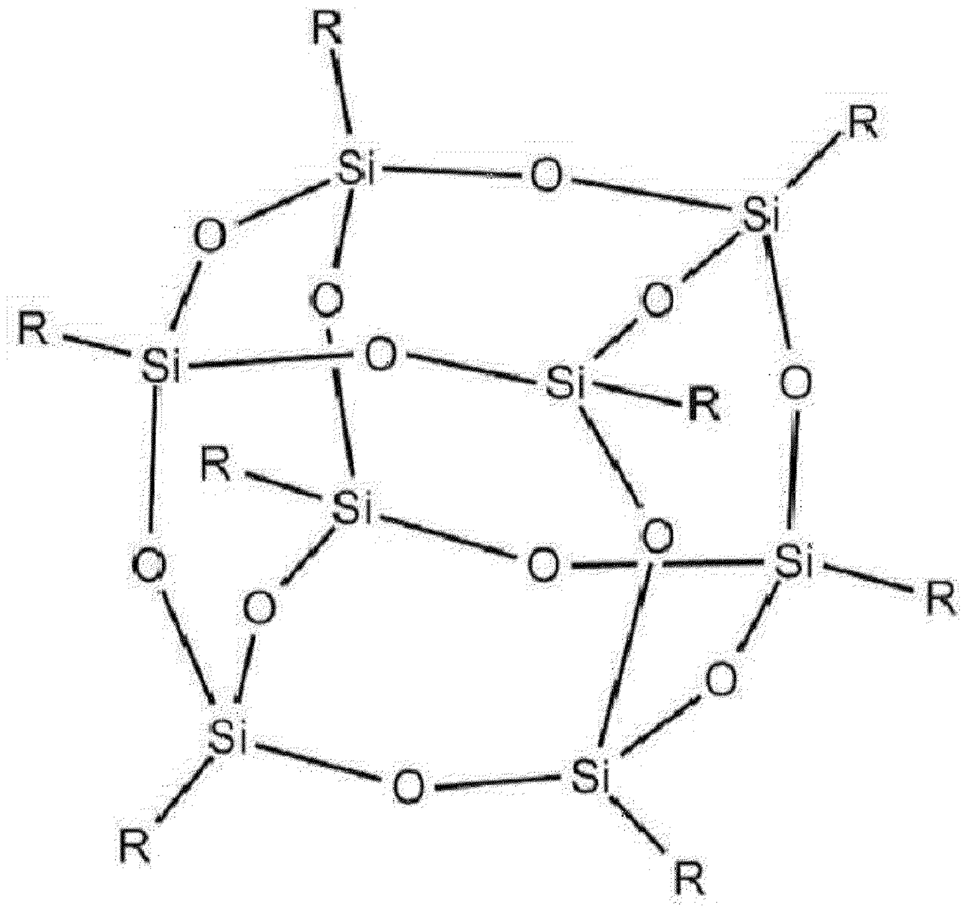

In Formula 1,
R is selected from the group consisting of groups that are the same or different from each other, and each independently represented by the following formulae 1-1 to 1-4:

[Formula 1-1]

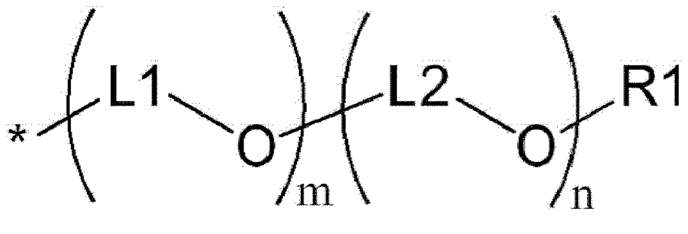

[Formula 1-2]

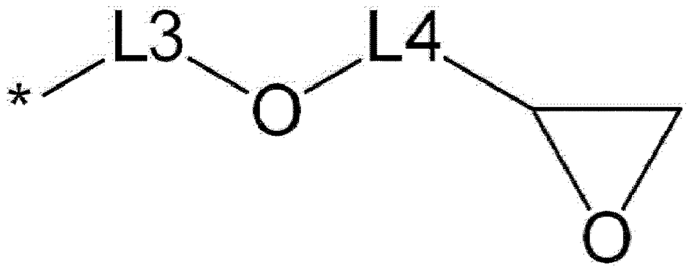

[Formula 1-3]

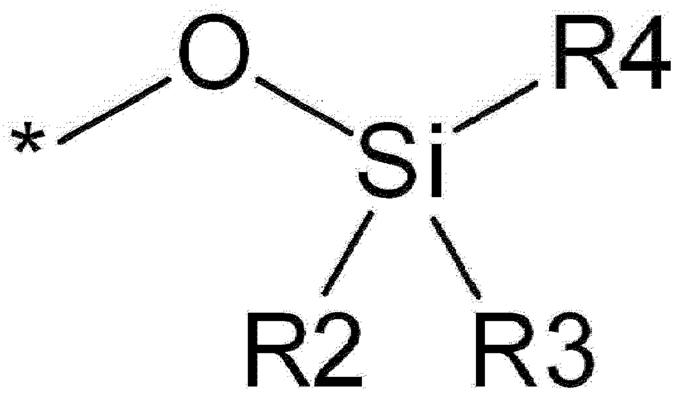

[Formula 1-4]

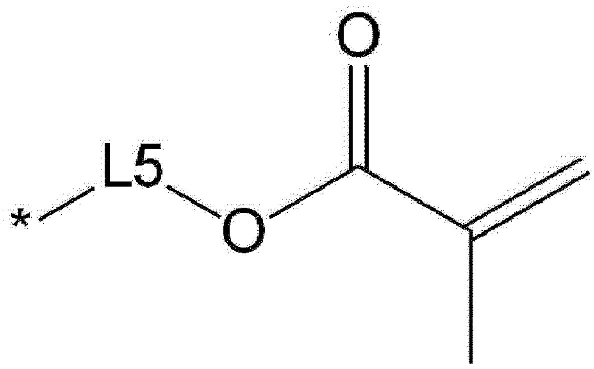

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

Furthermore, in Formulae 1-1 to 1-4, L1 to L5 are an alkylene group having 1 to 10 carbon atoms, R1 to R4 are hydrogen; a hydroxyl group; or an alkyl group having 1 to 30 carbon atoms, and m and n are the same or different from each other, each independently an integer of 0 to 10.
Further, in Formula 1, R is selected from the group consisting of a polyethylene glycol group, a glycidyl group, an octasilane group and a methacrylic group.
Moreover, the liquid polyhedral oligomeric silsesquioxane (POSS) may be included in an amount of 20% by weight to 50% by weight based on the total weight of the polymeric solid electrolyte, and more specifically, the content of the POSS may be 20% by weight or more, 25% by weight or more, 30% by weight or more, or 40% by weight or less,

45% by weight or less, or 50% by weight or less. If the content of the POSS is less than 20% by weight, the ionic conductivity improvement may be negligible, and if it is greater than 50% by weight, leakage may occur.

In addition, the type of liquid polyhedral oligomeric silsesquioxane (POSS) is not particularly limited as long as it is not cured upon heat treatment and can improve the movement of the polymer chains forming the polymer solid electrolyte. For example, the POSS may be PEG-POSS.

In the present invention, the lithium salt is included in the internal space of the crosslinking structure in a dissociated state, which can improve the ionic conductivity of the polymeric solid electrolyte.

The lithium salt may include one or more selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

Furthermore, the lithium salt may be comprised in an amount of 10% by weight to 40% by weight based on the total weight of the polymeric solid electrolyte, more specifically, it may be comprised in an amount of more than 10% by weight, more than 15% by weight, or more than 20% by weight, or less than 30% by weight, less than 35% by weight, or less than 40% by weight. If the lithium salt content is less than 10% by weight, the amount of dissociated lithium ions may be low, resulting in a lower ionic conductivity, and if it is greater than 40% by weight, the lithium salt may not be sufficiently dissociated, also resulting in a lower ionic conductivity.

In the present invention, the weight ratio of the polyhedral oligomeric silsesquioxane comprising the crosslinkable functional groups to PEG-POSS may be 0.05:1 to 1.5:1. Specifically, the weight ratio may be greater than or equal to 0.05:1, greater than or equal to 0.075:1, or greater than or equal to 0.1:1, and may be less than or equal to 1:, less than or equal to 1.25:1, or less than or equal to 1.5:1. Outside the above weight ratio range, the solid electrolyte form may be difficult to be formed, or the ionic conductivity may be reduced.

In the present invention, the polymeric solid electrolyte may be in the form of a free-standing film or in the form of a coating layer. The free-standing film refers to a film that has a certain strength at normal temperature and pressure and can maintain a film form by itself without a separate support. The coating layer means a layer obtained by coating the substrate.

The freestanding film or coating layer has the property of being a support that stably contains lithium ions, and thus may be in a form suitable as a polymeric solid electrolyte.

In the present invention, the polymeric solid electrolyte may further comprise a liquid electrolyte, wherein the liquid electrolyte may further improve the ionic conductivity of the polymeric solid electrolyte. The liquid electrolyte may also be contained in the internal space of the crosslinking structure.

The liquid electrolyte may be any liquid electrolyte conventionally used in the art, and the composition of the liquid electrolyte is not particularly limited as long as it is one that can be used in a lithium secondary battery. For example, the liquid electrolyte may comprise a lithium salt and a non-aqueous solvent. The lithium salt may be one of the lithium salts as described above. Further, the non-aqueous solvent may include one or more selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN), and sulfolane.

Further, the liquid electrolyte may be comprised in an amount of 1 to 5% by weight based on the total weight of the polymeric solid electrolyte. If the content of the liquid electrolyte is 1% by weight or less, the ionic conductivity enhancement effect may be insignificant, and if it is more than 5% by weight, the stability may be reduced.

(2) Preparation method of polymeric solid electrolyte (B)

The invention also relates to a method of preparing a polymeric solid electrolyte (B), the method comprising (S1) forming a first solution comprising a polyhedral oligomeric silsesquioxane (POSS) comprising a crosslinkable functional group (CFG-POSS) and a first lithium salt; (S2) forming a second solution comprising a polyethyleneglycol-polyhedral oligomeric silsesquioxane (POSS) and a second lithium salt; (S3) mixing the first and second solutions to form a solution for forming a polymeric solid electrolyte; (S4) applying the solution for forming a polymeric solid electrolyte to a substrate to form a coating film; and (S5) curing the coating film. The first lithium salt and the second lithium salt are arbitrarily distinguished to distinguish the lithium salts used in each step, and may be the same or different types of lithium salts. The lithium salt contained in the prepared polymeric solid electrolyte may comprise both the first lithium salt and the second lithium salt.

Hereinafter, a method for preparing a polymeric solid electrolyte (B) according to the present invention is described in more detail by each step. The type and content of each raw material are as described above.

In the present invention, in step (S1), a first solution comprising a polyhedral oligomeric silsesquioxane (POSS) comprising a crosslinkable functional group (CFG-POSS) and a first lithium salt can be formed.

The polyhedral oligomeric silsesquioxane (CFG-POSS) comprising the crosslinkable functional groups is liquid at room temperature and can be dissociated by the addition of lithium salt, but additional solvent may be added to increase the amount of dissociated lithium salts.

The solvent is not particularly limited as long as it is a solvent capable of dissociating the lithium salt in a liquid polyhedral oligomeric silsesquioxane comprising crosslinkable functional groups. For example, the organic solvent may be one or more selected from the group consisting of dimethylsulfoxide (DMSO), isopropyl alcohol, N-methylpyrrolidone (NMP), acetone, and xylene, N,N-Dimethylmethanamide (DMF), benzene, tetrahydrofuran (THF), and water. The amount of the solvent can be adjusted by considering the application thickness of the coating layer, or the properties of the solid electrolyte to be prepared.

In the present invention, in step (S2), a second solution comprising a polyethyleneglycol-polyhedral oligomeric silsesquioxane (POSS) and a second lithium salt can be formed.

Since the polyhedral oligomeric silsesquioxane is liquid at room temperature, it can be dissociated by adding lithium salts.

In the present invention, in step (S3), the first solution and the second solution may be mixed to form a solution for forming a polymeric solid electrolyte.

In the present invention, in step (S4), the solution for forming the polymeric solid electrolyte may be applied to the substrate to form a coating film.

The substrate is not particularly limited, provided that it can serve as a support on which the solution for forming the polymeric solid electrolyte is applied. For example, the substrate may be stainless use steel (SUS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-acrylic acid ethyl copolymer film, ethylene-acrylic acid methyl copolymer film, or polyimide film.

Furthermore, the application method is not particularly limited if it is a method by which the polymeric solid electrolyte forming solution can be applied in the form of a film on the substrate. For example, the application method may be bar coating, roll coating, spin coating, slit coating, die coating, blade coating, comma coating, slot die coating, lip coating, or solution casting.

In the present invention, in the step (S3), the coating film may be cured. By the curing process, crosslinking between the crosslinkable functional groups (CFGs) may be induced to form a crosslinking structure.

The curing can be thermal or light curing.

The heat curing may be heat treating by applying a temperature of 80°C to 200°C. Specifically, the heat treatment temperature may be 80°C or more, 90°C or more, or 100°C or more, or 160°C or less, 180°C or less, or 200°C or less. If the heat treatment temperature is below 80°C, the crosslinks may not be sufficiently formed, and if the heat treatment temperature is above 200°C, the polymer solid electrolyte may be excessively cured, resulting in a decrease in ionic conductivity, or the formed film may be damaged by heat.

Further, the light curing may be performed using ultraviolet rays (UV) or electron beams.

**[Polymeric solid electrolyte (C)]**

(1) Polymeric solid electrolyte (C)

The present invention relates to a polymeric solid electrolyte (C).

The polymeric solid electrolyte (C) according to the present invention comprises a liquid polyhedral oligomeric silsesquioxane (POSS); a solid crosslinking agent; and a lithium salt.

Further, the polymeric solid electrolyte has a crosslinking structure formed by crosslinking between solid crosslinking agents. The lithium salt may exist in a dissociated state in a free volume, which is an internal space of the crosslinking structure. The crosslinking structure can improve safety by preventing leakage or volatilization, while also improving ionic conductivity by acting as a transport channel for lithium ions. In addition, the liquid polyhedral oligomeric silsesquioxane (POSS) may also be included in the free volume. The crosslinking structure can improve safety by preventing leakage or volatilization, while also improving ionic conductivity by acting as a transport channel for lithium ions. The free volume can also provide space for the solid electrolyte chains to move, which can improve ionic conductivity.

FIG. 3 is a schematic illustrating the internal structure of a polymeric solid electrolyte (C) according to one embodiment of the present invention.

Referring to FIG. 3, the polymeric solid electrolyte (1) has a crosslinking structure formed by the solid crosslinking agent (40) and an internal space included in the crosslinking structure. The internal space may refer to a free volume. A liquid polyhedral oligomeric silsesquioxane (POSS) (20) may be included in the internal space, and a lithium salt (not shown in the drawing) may be included in the internal space in a dissociated state.

In the present invention, the solid crosslinking agent may have the property of initially being a liquid phase, but changing to a solid phase by forming a crosslink by a curing process using heat or light.

For example, the crosslinking agent may be one or more oligomers selected from the group consisting of poly(ethylene glycol) diacrylate (PEGDA), polyethylene glycol) dimethacrylate (PEGDMA), and poly(ethylene glycol) divinyl ether (PEGDVE). The solid crosslinking agents may have a stronger propensity to bind to each other upon heat treatment and/or light treatment, which may be more favorable for the formation of a crosslinked structure by crosslinking. The crosslinking may refer to a physical bond between the solid crosslinking agents.

Furthermore, the solid crosslinking agent may be comprised in an amount of 20% by weight to 60% by weight based on the total weight of the polymeric solid electrolyte, more specifically, it may be comprised in an amount of more than 20% by weight, more than 25% by weight, or more than 30% by weight, or less than 50% by weight, less than 55% by weight, or less than 60% by weight. If the content of the solid crosslinking agent is less than 20% by weight, no crosslinking structure can be formed, and if it is more than 60% by weight, the crosslinking structure may be excessive and the transport path of ions may be blocked, resulting in a decrease in ionic conductivity.

In the present invention, the liquid polyhedral oligomeric silsesquioxane (POSS) may be represented by formula 1 below:

[Formula 1]

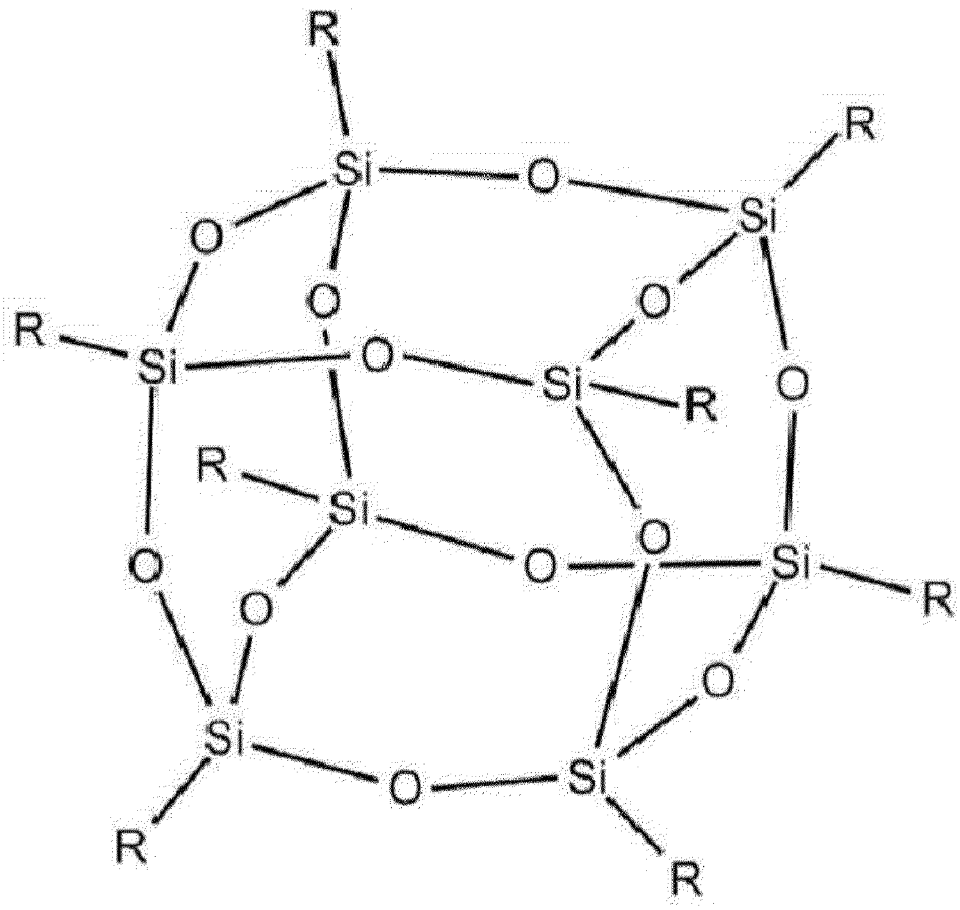

In Formula 1,

R is selected from the group consisting of groups that are the same or different from each other, and each independently represented by the following formulae 1-1 to 1-4:

[Formula 1-1]

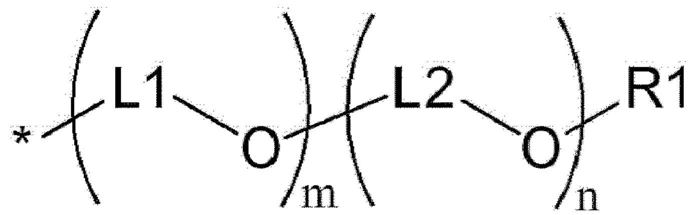

[Formula 1-2]

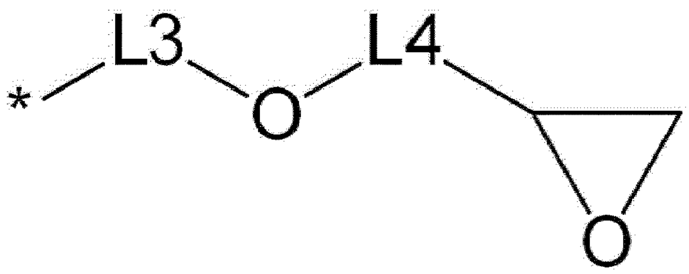

[Formula 1-3]

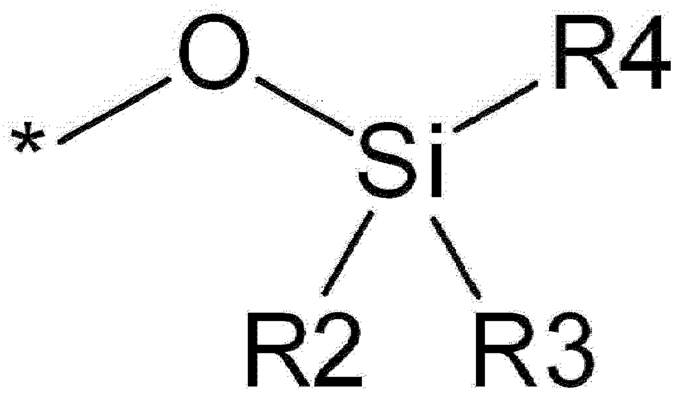

[Formula 1-4]

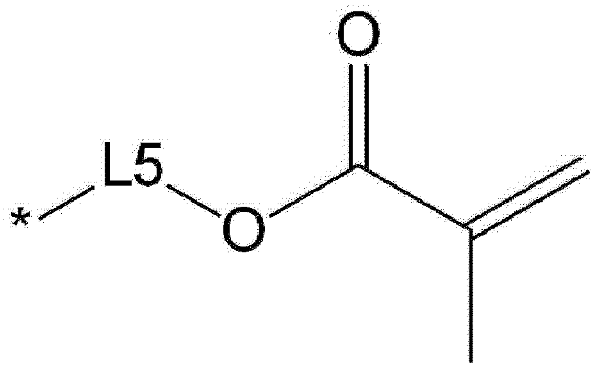

In Formulae 1-1 to 1-4,

L1 to L5 are an alkylene group having 1 to 30 carbon atoms,
R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

Furthermore, in Formulae 1-1 to 1-4, L1 to L5 are an alkylene group having 1 to 10 carbon atoms, R1 to R4 are hydrogen; a hydroxyl group; or an alkyl group having 1 to 30 carbon atoms, and m and n are the same or different from each other, each independently an integer of 0 to 10.
Further, in Formula 1, R is selected from the group consisting of a polyethylene glycol group, a glycidyl group, an octasilane group and a methacrylic group.
Preferably, the liquid polyhedral oligomeric silsesquioxane (POSS) may be a liquid polyethylene glycol-polyhedral oligomeric silsesquioxane (PEG-POSS), wherein R of Formula 1 is a polyethylene glycol (PEG) group.
Furthermore, the liquid polyhedral oligomeric silsesquioxane (POSS) may be comprised in an amount of 20% by weight to 60% by weight based on the total weight of the polymeric solid electrolyte, and more specifically, the content of liquid polyhedral oligomeric silsesquioxane may be greater than 20% by weight, greater than 25% by weight, or greater than 30% by weight, or less than 50% by weight, less than 55% by weight, or less than 60% by weight. If the content of liquid polyhedral oligomeric silsesquioxane is less than 20% by weight, the ionic conductivity improvement effect may be negligible, and if the content is greater than 60% by weight, there may be problems of not maintaining strength as a solid electrolyte membrane or leakage.
In the present invention, the lithium salt is included in the internal space of the crosslinking structure in a dissociated state, which can improve the ionic conductivity of the polymeric solid electrolyte.
The lithium salt may include one or more selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.
Furthermore, the lithium salt may be comprised in an amount of 10% by weight to 30% by weight based on the total weight of the polymeric solid electrolyte, and more specifically, the content of the lithium salt may be 10% by weight or more, 13% by weight or more, 15% by weight or more, or 25% by weight or less, 28% by weight or less, or 30% by weight or less. If the lithium salt content is less than 10% by weight, the amount of dissociated lithium ions may be low, resulting in lower ionic conductivity, and if the lithium salt content is greater than 30% by weight, the lithium salt may not be sufficiently dissociated, also resulting in lower ionic conductivity.
In the present invention, the polymeric solid electrolyte may be in the form of a free-standing film or in the form of a coating layer. The free-standing film refers to a film that has a certain strength at normal temperature and pressure and can maintain a film form by itself without a separate support. The coating layer means a layer obtained by coating on the substrate.
The freestanding film or coating layer has the property of being a support that stably contains lithium ions, and thus may be in a form suitable as a polymeric solid electrolyte.
In the present invention, the polymeric solid electrolyte may further comprise a liquid electrolyte, wherein the liquid electrolyte may further improve the ionic conductivity of the polymeric solid electrolyte. The liquid electrolyte may also be contained in the internal space of the crosslinking structure.
The liquid electrolyte may be any liquid electrolyte conventionally used in the art, and the composition of the liquid electrolyte is not particularly limited as long as it is one that can be used in a lithium secondary battery. For example, the liquid electrolyte may comprise a lithium salt and a non-aqueous solvent. The lithium salt may be one of the lithium salts as described above. Further, the non-aqueous solvent may include one or more selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN), and sulfolane.
Further, the liquid electrolyte may be comprised in an amount of 1 to 5% by weight based on the total weight of the polymeric solid electrolyte. If the content of the liquid electrolyte is 1% by weight or less, the ionic conductivity enhancement effect may be insignificant, and if it is more than 5% by weight, the stability may be reduced.

(2) Preparation method of polymeric solid electrolyte (C)

The present invention also relates to a method of preparing a polymeric solid electrolyte (C), the method comprising (S1) forming a solution for forming a polymeric solid electrolyte comprising a liquid phase polyhedral oligomeric

silsesquioxane (POSS), a crosslinking agent, and a lithium salt; (S2) applying the solution for forming a polymeric solid electrolyte to a substrate to form a coating film; and (S3) curing the coating film.

Hereinafter, a method for preparing a polymeric solid electrolyte (C) according to the present invention is described in more detail by each step.

In the present invention, in step (S1), a solution for forming a polymeric solid electrolyte comprising a liquid polyhedral oligomeric silsesquioxane (POSS), a crosslinking agent and a lithium salt can be formed. The type and content of the polyhedral oligomeric silsesquioxane, crosslinking agent and lithium salt are as described above.

The polyhedral oligomeric silsesquioxane (POSS) is a liquid phase, and a lithium salt can be added to the liquid polyhedral oligomeric silsesquioxane to dissociate it, and then a crosslinking agent can be added to form a solution for forming a polymeric solid electrolyte. The crosslinking agent is in a liquid state and has the property of changing into a solid state by forming a crosslink by a curing process as described hereinafter.

In the present invention, in step (S2), the solution for forming the polymeric solid electrolyte may be applied to the substrate to form a coating film.

The substrate is not particularly limited, provided that it can serve as a support on which the solution for forming the polymeric solid electrolyte is applied. For example, the substrate may be stainless use steel (SUS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-acrylic acid ethyl copolymer film, ethylene-acrylic acid methyl copolymer film, or polyimide film.

Furthermore, the application method is not particularly limited if it is a method by which the polymeric solid electrolyte forming solution can be applied in the form of a film on the substrate. For example, the application method may be bar coating, roll coating, spin coating, slit coating, die coating, blade coating, comma coating, slot die coating, lip coating, or solution casting.

In the present invention, in step (S3), the coating film may be cured. By the curing process, crosslinking between the crosslinking agents may be induced such that the crosslinking agents become a solid phase, and a crosslinking structure composed of crosslinks between the solid crosslinking agents may be formed.

The curing can be thermal or light curing.

The heat curing may be heat treating by applying a temperature of 80°C to 200°C. Specifically, the heat treatment temperature may be 80°C or more, 90°C or more, or 100°C or more, or 160°C or less, 180°C or less, or 200°C or less. If the heat treatment temperature is below 80°C, the crosslinks may not be sufficiently formed, and if the heat treatment temperature is above 200°C, the polymer solid electrolyte may be excessively cured, resulting in a decrease in ionic conductivity, or the formed film may be damaged by heat.

Further, the light curing may be performed using ultraviolet rays (UV) or electron beams.

**All-solid-state battery**

The present invention also relates to an all-solid-state battery comprising the polymeric solid electrolyte. The all-solid-state battery includes a positive electrode layer, a negative electrode layer, and a solid electrolyte layer formed between the positive electrode layer and the negative electrode layer, wherein at least one of the positive electrode layer, negative electrode layer, and solid electrolyte layer may comprise the polymeric solid electrolyte.

When the positive electrode layer includes a polymeric solid electrolyte, the polymeric solid electrolyte may be formed on one side of the positive electrode active material layer. Further, when the negative electrode layer includes a polymeric solid electrolyte, the polymeric solid electrolyte may be formed on one side of the negative electrode active material layer. When the positive electrode layer and/or negative electrode layer includes a polymeric solid electrolyte, an effect of improving the ionic conductivity of the positive electrode and negative electrode may be exhibited.

Further, in the positive electrode and/or negative electrode, the polymeric solid electrolyte may act as an adhesive. Additional layer may be formed on the polymeric solid electrolyte acting as an adhesive. For example, a protective layer for protecting the positive electrode and the negative electrode may be formed by the polymeric solid electrolyte acting as an adhesive.

Furthermore, when the solid electrolyte layer includes the polymeric solid electrolyte, it can perform the function of an electrolyte by itself.

In the present invention, the positive electrode included in the all-solid-state battery includes a positive electrode active material layer, and the positive electrode active material layer may be formed on one side of the positive electrode current collector.

The positive electrode active material layer includes a positive electrode active material, a binder, and a conductive material.

Furthermore, the positive electrode active material is not particularly limited as long as the material is capable of reversibly adsorbing and releasing lithium ions, such as, for example, lithium cobalt oxides (LiCoOz), lithium nickel oxides (LiNiOz), a layered compound or a compound substituted with one or more transition metals such as $Li[Ni_xCo_yM$-

$n_zM_v]O_2$ (wherein M is any one or two or more elements selected from the group consisting of Al, Ga and In; 0.3≤x<1.0, 0≤y, z≤0.5, 0≤v≤0.1, and x+y+z+v=1), $Li(Li_aM_{b-a-b'}M'_{b'})O_{2-c}A_c$ (wherein 0≤a≤0.2, 0.6≤b≤1, 0≤b'≤0.2, and 0≤c≤0.2; M includes Mn and at least one selected from the group consisting of Ni, Co, Fe, Cr, V, Cu, Zn and Ti; M' is at least one selected from the group consisting of Al, Mg and B; and A is at least one selected from the group consisting of P, F, S and N); lithium manganese oxides such as $Li_{1+y}Mn_{2-y}O_4$ (wherein y is 0 to 0.33), $LiMnO_3$, LiMnzOa or $LiMnO_2$; lithium copper oxides ($Li_2CuO_2$); vanadium oxides, such as LiVaOs, $LiFe_3O_4$, $V_2O_5$, $Cu_2V_2O_7$; lithium nickel oxides of the Ni site type represented by formula $LiN_{1-y}MyO_2$ (wherein M is Co, Mn, Al, Cu, Fe, Mg, B or Ga, and y is 0.01 to 0.3); lithium manganese complex oxides represented by formula $LiMn_{2-y}M_yO_2$ (where M is Co, Ni, Fe, Cr, Zn or Ta, and y is 0.01 to 0.1) or $Li_2Mn_3MO_8$ (wherein M is Fe, Co, Ni, Cu or Zn); $LiMn_2O_4$ wherein the Li portion of the formula is substituted by an alkaline earth metal ion; disulfide compounds; or $Fe_2(MoO_4)_3$, but is not limited thereto.

Further, the positive electrode active material may be comprised in an amount of 40 to 80% by weight based on the total weight of the positive electrode active material layer. Specifically, the content of the positive electrode active material may be greater than 40% by weight or greater than 50% by weight, and may be less than or equal to 70% by weight or less than or equal to 80% by weight. A content of less than 40% by weight of the positive electrode active material may result in a lack of connectivity between the wet positive electrode active layer and the dry positive electrode active layer, and a content of more than 80% by weight may result in a greater mass transfer resistance.

In addition, the binder is a component that assists in the bonding of the positive electrode active material and the conductive material to the current collector, and the binder may include one or more selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may comprise one or more selected from the group consisting of styrene-butadiene rubber, polytetrafluoroethylene, carboxymethylcellulose, polyacrylic acid, lithium polyacrylate, and polyvinylidene fluoride.

Furthermore, the binder may be comprised in an amount of 1 % by weight to 30% by weight based on the total weight of the positive electrode active material layer, and more specifically, the content of the binder may be more than 1 % by weight or more than 3% by weight, and less than 15% by weight or less than 30% by weight. If the binder content is less than 1% by weight, the adhesion of the positive electrode active material to the positive electrode current collector may be reduced, and if the binder content is greater than 30% by weight, the adhesion may be improved, but the content of the positive electrode active material may be reduced, resulting in a lower battery capacity.

Furthermore, the conductive material is not particularly limited as long as it prevents side reactions in the internal environment of the all-solid-state battery and has excellent electrical conductivity without causing any chemical changes in the battery, and graphite or conductive carbon can be used, for example, graphite such as natural graphite or artificial graphite; carbon black such as carbon black, acetylene black, ketjen black, denka black, thermal black, channel black, furnace black, lamp black or summer black; carbon-based materials having a crystal structure of graphene or graphite; conductive fibers such as carbon fibers or metal fibers; carbon fluoride; metal powders such as aluminum powder or nickel powder; conductive whiskers such as zinc oxide or potassium titanate; conductive oxides such as titanium oxide; or conductive polymers such as polyphenylene derivatives can be used alone or in a mixture of two or more thereof, but it is not necessarily limited thereto.

The conductive material may be typically comprised in an amount of 0.5% by weight to 30% by weight based on the total weight of the positive electrode active material layer, and more specifically, the content of the conductive material may be more than 0.5% by weight or more than 1% by weight, less than 20% by weight or less than 30% by weight. If the content of the conductive material is too small, such as less than 0.5% by weight, the electrical conductivity may not be improved or the electrochemical properties of the battery may be degraded, and if the content is too large, such as more than 30% by weight, the amount of positive electrode active material may be relatively small, resulting in a decrease in capacity and energy density. The method of incorporating the conductive material into the positive electrode is not substantially limited, and any conventional method known in the art can be used, such as coating the positive electrode active material.

Further, the positive electrode current collector supports the positive electrode active material layer and serves to transfer electrons between the external conductor and the positive electrode active material layer.

The positive electrode current collector is not particularly limited as long as it has a high electronic conductivity without causing any chemical changes in the all-solid-state battery. For example, the positive electrode current collector may be made of copper, stainless steel, aluminum, nickel, titanium, palladium, calcined carbon, copper or stainless steel

whose surface is treated with carbon, nickel or silver, or aluminum-cadmium alloy.

The positive electrode current collector can form microscopic irregularities on its surface or employ a three-dimensional porous structure to strengthen the binding with the positive electrode active material layer. Accordingly, the positive electrode current collector may comprise various forms such as films, sheets, foils, meshes, nets, porous materials, foams, non-woven materials, etc.

The positive electrode as described above can be manufactured according to a conventional method, and more particularly, a composition for forming a positive electrode active material layer prepared by mixing a positive electrode active material with a conductive material and a binder in an organic solvent is applied to a positive electrode current collector and dried, and optionally compression molded onto the current collector to improve the electrode density. It is preferable to use an organic solvent that can uniformly disperse the positive electrode active material, binder, and conductive material, and that is easily evaporated. Specific examples thereof include acetonitrile, methanol, ethanol, tetrahydrofuran, water or isopropyl alcohol.

In the present invention, the negative electrode included in the all-solid-state battery includes a negative electrode active material layer, and the negative electrode active material layer may be formed on one side of the negative electrode current collector.

The negative electrode active material may include a material capable of reversibly intercalating or deintercalating lithium ($Li^+$), a material capable of reacting with lithium ions to reversibly form a lithium-containing compound, a lithium metal, or a lithium alloy.

The material where the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be lithium metal, and more specifically, may be in the form of lithium metal thin film or lithium metal powder.

The negative electrode active material may be comprised in an amount of 40 to 80% by weight based on the total weight of the negative electrode active material layer. Specifically, the content of the negative electrode active material may be greater than 40% by weight or greater than 50% by weight, and may be less than or equal to 70% by weight or less than or equal to 80% by weight. A content of less than 40% by weight of the negative electrode active material may result in a lack of connectivity between the wet negative electrode active layer and the dry negative electrode active material layer, and a content of more than 80% by weight may result in a greater mass transfer resistance.

Further, the binder is as described above for the positive electrode active material layer.

Further, the conductive material is as described above for the positive electrode active material layer.

Furthermore, the negative electrode current collector is not particularly limited as long as it is conductive without causing any chemical changes in the battery, and for example, the negative electrode current collector may be made of copper, stainless steel, aluminum, nickel, titanium, palladium, calcined carbon, copper or stainless steel whose surface is treated with carbon, nickel or silver, or aluminum-cadmium alloy. Also, like the positive electrode current collector, the negative electrode current collector may be in various forms, such as such as films, sheets, foils, meshes, nets, porous materials, foams, non-woven materials, etc. with microscopic irregularities formed on the surface thereof.

The method of preparation of the negative electrode is not particularly limited and can be prepared by forming a negative electrode active material layer on the negative electrode current collector using a method for forming a layer or film conventionally used in the art. For example, methods such as pressing, coating or deposition can be utilized. The negative electrode of the present invention also includes cases in which a metal lithium film is formed on a metal plate by initial charging after the battery is assembled with no lithium film on the negative electrode current collector.

Battery Module

The present invention also provides a battery module including the all-solid-state battery as a unit cell, a battery pack including the battery module, and a device including the battery pack as a power source.

Specific examples of such devices include, but are not limited to, a power tool powered by an all-electric motor; an electric vehicle including an electric vehicle (EV), a hybrid electric vehicle (HEV) or a plug-in hybrid electric vehicle (PHEV); an electric two-wheeler including an electric bicycle (E-bike) or an electric scooter (E-scooter); an electric golf cart; and a power storage system.

[Mode for Practicing the Invention]

Hereinafter, preferred embodiments are presented to facilitate understanding of the present invention, but it

would be apparent to those skilled in the art that the following embodiment is only an example of the present invention, and that various changes and modifications are possible within the scope of the present invention and the technical idea, and that such changes and modifications fall within the scope of the appended patent claims.

**[Examples 1 to 3 and Comparative Examples 1 to 4].**

In Examples 1 to 3 and Comparative Examples 1 to 4 below, a polymeric solid electrolyte (A) was prepared according to the composition as shown in Table 1 below.

[Table 1]

| | Polymeric solid electrolyte (A) | | | Curing method |
|---|---|---|---|---|
| | Polymer | Lithium salt | Weight ratio (Polymer:Lithium salt) | |
| Example 1 | Glycidyl-POSS | LiTFSI | 1:0.1 | Heat Treatment |
| Example 2 | Glycidyl-POSS | LiTFSI | 1:0.4 | Heat Treatment |
| Example 3 | Acrylo-POSS | LiTFSI | 1:0.4 | Heat Treatment |
| Comparative Example 1 | PEG-POSS | LiTFSI | 1:0.4 | Heat Treatment |
| Comparative Example 2 | Glycidyl-POSS | LiTFSI | 1:0.4 | - |
| Comparative Example 3 | Methacryl-POSS | LiTFSI | 1:0.4 | Heat Treatment |
| Comparative Example 4 | Allyl-POSS | LiTFSI | 1:0.4 | Heat Treatment |

**Example 1**

A lithium salt, LiTFSI, was added to a liquid polyhedral oligomeric silsesquioxane (Glycidyl-POSS) containing a crosslinkable functional group, glycidyl, and stirred sufficiently for 12 hours to obtain a solution for forming a polymeric solid electrolyte. At this time, a solvent, N-methyl-2-pyrrolidone (NMP), was further added to ensure that the glycidyl-POSS and LiTFSI were well mixed. The weight ratio of Glycidyl-POSS and LiTFSI was 1:0.1.

The solution for forming a polymer solid electrolyte was applied by a doctor blade on the SUS foil to form a coating film.

Subsequently, it was heat-treated at 130 °C for 1 day, dried simultaneously with thermal curing, and a film-like polymer solid electrolyte was prepared.

**Example 2**

The polymeric solid electrolyte was prepared in the same way as in Example 1, except that the weight ratio of POSS and lithium salt containing crosslinkable functional groups (Glycidyl-POSS and LiTFSI) was 1:0.4.

**Example 3**

Using polyhedral oligomeric silsesquioxane (acrylo-POSS) containing acrylo as a crosslinkable functional group, the polymeric solid electrolyte was prepared in the same way as in Example1, except that the weight ratio of acrylo-POSS to LiTFSI was 1:0.4.

**Comparative Example 1**

The polymeric solid electrolyte was prepared in the same way as in Example 1, except that polyhedral oligomeric silsesquioxane containing polyethylene glycol (PEG-POSS) was used instead of glycidyl-POSS.

**Comparative Example 2**

The polymeric solid electrolyte was prepared in the same way as in Example 2, except that no heat treatment was used and the solvent, NMP, was vacuum dried at 80°C to dry it.

**Comparative Example 3**

The polyhedral solid electrolyte was prepared in the same way as in Example 2, except that the polyhedral oligomeric silsesquioxane (Methacryl-POSS) containing methacryl, a non-crosslinkable functional group, was used instead of glycidyl-POSS.

**Comparative Example 4**

The polymeric solid electrolyte was prepared in the same manner as in Example 2, except that polyhedral oligomeric silsesquioxane (allyl-POSS) containing allyl, a non-crosslinkable functional group, was used instead of glycidyl-POSS.

**Experimental Example 1: Evaluation of the properties of a polymeric solid electrolyte (A)**

The polymeric solid electrolytes prepared in Examples 1 to 3 and Comparative Examples 1 to 4 were tested for ionic conductivity and membrane condition by the following methods, and the results are shown in Table 2 below.

(1) Ionic conductivity

The coin cell was prepared by burning the polymeric solid electrolyte in a circle with a size of 1.7671 $cm^2$ and placing the burned polymeric solid electrolyte between two sheets of stainless steel (SUS). An AC voltage was applied to the coin cell at room temperature, and the application condition was set to a measurement frequency of amplitude range of 500 KHz to 20 MHz, and the impedance was measured using a VMP3 manufactured by BioLogic. Using Formula 1 below, the resistance (Rb) of the polymeric solid electrolyte was obtained from the intersection of the semicircle or straight line of the measured impedance trajectory with the actual axis, and the ionic conductivity ($\sigma$) was calculated from the width (A) and thickness (t) of the polymeric solid electrolyte.

[Formula 1]

$$\sigma\ (S \cdot cm^{-1}) = \frac{1}{R_b}\frac{t}{A}$$

$\sigma$: Ionic conductivity of the polymeric solid electrolyte
Rb: Resistance
A: Width of polymer solid electrolyte
T: Thickness of the polymer solid electrolyte

(2) Membrane Status

The membrane state of the polymeric solid electrolyte was observed with naked eyes to determine whether it was formed in the form of a film.

[Table 2]

| | Thickness (μm) | Ionic conductivity (S/cm, 25 °C) | Membrane Status |
|---|---|---|---|
| Example 1 | 45 | 9.55.E-07 | Solid membrane |
| Example 2 | 43 | 2.19.E-06 | Solid membrane |
| Example 3 | 47 | 1.82.E-06 | Solid membrane |
| Comparative Example 1 | - | - | Liquid |
| Comparative Example 2 | - | - | Liquid |

(continued)

| | Thickness (μm) | Ionic conductivity (S/cm, 25 °C) | Membrane Status |
|---|---|---|---|
| Comparative Example 3 | 32 | 3.98.E-07 | Solid membrane |
| Comparative Example 4 | 45 | 8.28.E-07 | Solid membrane |

As shown in Table 2 above, when a liquid POSS containing crosslinkable functional groups and a lithium salt were used as raw materials and subjected to heat treatment, a solid membrane with improved ionic conductivity was produced.

**[Examples 4 to 10 and Comparative Examples 5 to 9].**

In Examples 4 to 10 and Comparative Examples 5 to 9 below, a polymeric solid electrolyte (B) was prepared according to the composition as shown in Table 3 below.

[Table 3]

| | Polymeric solid electrolyte (B) | | | | Heat treatment |
|---|---|---|---|---|---|
| | POSS | POSS with crosslinking functional groups (CFG-POSS) | Lithium salt | Weight ratio (POSS:GL-POSS) | |
| Example 4 | PEG-POSS | GL-POSS | LiTFSI | 1 : 1 | Heat Treatment |
| Example 5 | PEG-POSS | GL-POSS | LiTFSI | 1 : 0.25 | Heat Treatment |
| Example 6 | PEG-POSS | MA-POSS | LiTFSI | 1 : 0.1 | Heat Treatment |
| Example 7 | PEG-POSS | MA-POSS | LiTFSI | 1 : 0.2 | Heat Treatment |
| Example 8 | PEG-POSS | MA-POSS | LiTFSI | 1 : 0.3 | Heat Treatment |
| Example 9 | PEG-POSS | AL-POSS | LiTFSI | 1 : 0.2 | Heat Treatment |
| Example 10 | PEG-POSS | AC-POSS | LiTFSI | 1 : 0.2 | Heat Treatment |
| Comparative Example 5 | PEG-POSS | - | LiTFSI | - | - |
| Comparative Example 6 | PEG-POSS | - | LiTFSI | - | Heat Treatment |
| Comparative Example 7 | - | GL-POSS | LiTFSI | - | - |
| Comparative Example 8 | PEG-POSS | GL-POSS | LiTFSI | 1 : 0.025 | Heat Treatment |
| Comparative Example 9 | - | MA-POSS | LiTFSI | - | Heat Treatment |

**Example 4**

(1) Preparation of solution for forming a polymeric solid electrolyte

The first solution was prepared by uniformly mixing and dissociating the lithium salt, LiTFSI, in liquid PEG-POSS, in a weight ratio of 1:0.4.

A liquid polyhedral oligomeric silsesquioxane (GL-POSS) containing a crosslinkable functional group, glycidyl (GL), and a lithium salt, LiTFSI, were uniformly mixed and dissociated in a weight ratio of 1:0.4. A solvent, NMP, was added to the GL-POSS in an equal amount to prepare a second solution.

The first solution and the second solution were uniformly mixed so that the weight ratio of PEG-POSS and GL-POSS was 1:1, and a solution for forming a polymeric solid electrolyte was prepared.

(2) Manufacture of polymeric solid electrolyte

The solution for forming a polymer solid electrolyte was applied by a doctor blade on the SUS foil to form a coating film.

Subsequently, the polymeric solid electrolyte was prepared by heat treatment at 130 °C for 1 day and vacuum drying.

**Example 5**

The polymeric solid electrolyte was prepared in the same way as in Example 4, except that the weight ratio of PEG-POSS to GL-POSS was 1:0.25.

**Example 6**

The polymeric solid electrolyte was prepared in the same way as in Example 4, except that MA-POSS (methacryl-POSS) was used instead of GL-POSS and the weight ratio of PEG-POSS to MA-POSS was 1:0.1.

**Example 7**

The polymeric solid electrolyte was prepared in the same way as in Example 6, except that the weight ratio of PEG-POSS to MA-POSS was 1:0.2.

**Example 8**

The polymeric solid electrolyte was prepared in the same way as in Example 6, except that the weight ratio of PEG-POSS to MA-POSS was 1:0.3.

**Example 9**

The polymeric solid electrolyte was prepared in the same way as in Example 4, except that AL-POSS (allyl-POSS) was used instead of GL-POSS and the weight ratio of PEG-POSS to AL-POSS was 1:0.2.

**Example 10**

The polymeric solid electrolyte was prepared in the same way as in Example 4, except that AC-POSS (acrylo-POSS) was used instead of GL-POSS and the weight ratio of PEG-POSS to AC-POSS was 1:0.2.

**Comparative Example 5**

Without using GL-POSS, PEG-POSS and LiTFSI were mixed in a weight ratio of 1:0.4 and carried out in the same way as in Example 4 without heat treatment.

**Comparative Example 6**

The method was the same as in Comparative Example 5, except for the heat treatment. The heat treatment was performed by heat treatment at 130°C for one day and vacuum drying.

**Comparative Example 7**

The second solution prepared in Example 4 was applied with a doctor blade to the SUS foil to form a coating film. No heat treatment was performed.

**Comparative Example 8**

The same method was used as in Example 4, except that the weight ratio of PEG-POSS to GL-POSS was 1:0.025.

**Comparative Example 9**

The second solution was prepared as in Example 4, except that only the second solution was prepared using MA-POSS instead of GL-POSS, and then a coating film was formed and heat treated with the second solution alone.

**Experimental Example 2: Evaluation of the properties of a polymeric solid electrolyte (B)**

For the polymeric solid electrolytes prepared in Examples 4 to 10 and Comparative Examples 4 to 9, tests for ionic conductivity and membrane state were performed using the same method as in Experimental Example 1, and the results are shown in Table 4 below.

[Table 4]

| | Thickness (μm) | Ionic conductivity (S/cm, 25 °C) | Membrane Status |
|---|---|---|---|
| Example 4 | 45 | 1.24.E-05 | Solid membrane |
| Example 5 | 43 | 2.21.E-05 | Solid membrane |
| Example 6 | 45 | 3.89.E-06 | Solid membrane |
| Example 7 | 47 | 3.42.E-06 | Solid membrane |
| Example 8 | 53 | 2.89.E-06 | Solid membrane |
| Example 9 | 46 | 4.27.E-06 | Solid membrane |
| Example 10 | 55 | 4.56.E-06 | Solid membrane |
| Comparative Example 5 | - | - | Liquid |
| Comparative Example 6 | - | - | Liquid |
| Comparative Example 7 | - | - | Liquid |
| Comparative Example 8 | - | - | Liquid |
| Comparative Example 9 | 32 | 3.89.E-07 | Solid membrane |

As shown in Table 4 above, Examples 4 to 10 all produced solid electrolytes with good ionic conductivity.

On the other hand, in Comparative Examples 5 and 6, a liquid electrolyte was prepared without POSS containing crosslinking functional groups.

Also, in Comparative Example 7, GL-POSS containing a crosslinking functional group, glycidyl (GL), was used, but no heat treatment was performed, resulting in a liquid electrolyte.

In addition, in Comparative Example 8, PEG-POSS and GL-POSS were used as raw materials as in Example 1, but the amount of GL-POSS used was too small, resulting in a liquid electrolyte.

Also, in Comparative Example 9, a solid electrolyte was prepared, but the ionic conductivity was found to be reduced due to the lack of PEG-POSS.

**[Examples 11 to 14 and Comparative Examples 10 to 12].**

In Examples 11 to 14 and Comparative Examples 10 to 12 below, a polymeric solid electrolyte (C) was prepared according to the composition as shown in Table 5 below.

[Table 5]

| | Polymeric solid electrolyte (C) | | | | Heat Treatment |
|---|---|---|---|---|---|
| | POSS | Crosslinking agent | Lithium salt | Weight ratio (POSS:Crosslinking agent) | |
| Example 11 | PEG-POSS | PEGDMA | LiTFSI | 1 : 1 | Heat Treatment |
| Example 12 | PEG-POSS | PEGDMA | LiTFSI | 1 : 2 | Heat Treatment |
| Example 13 | PEG-POSS | PEDGA | LiTFSI | 1 : 1 | Heat Treatment |
| Example 14 | PEG-POSS | PEGDVE | LiTFSI | 1 : 1 | Heat Treatment |
| Comparative Example 10 | PEG-POSS | - | LiTFSI | - | - |
| Comparative Example 11 | PEG-POSS | - | LiTFSI | - | Heat Treatment |
| Comparative Example 12 | - | PEGDMA | LiTFSI | - | - |

**Example 11**

The liquid polyethylene glycol-polyhedral oligomeric silsesquioxane (PEG-POSS) and the lithium salt, LiTFSI, were uniformly mixed in a weight ratio of 1:0.4 to dissociate the LiTFSI. The crosslinking agent, poly(ethylene glycol) dimethacrylate (PEGDMA), was then further mixed to obtain a solution for forming a polymeric solid electrolyte. At this time, the weight ratio of PEG-POSS to PEGDMA was 1:1.

The solution for forming a polymeric solid electrolyte was applied with a doctor blade on the SUS foil to form a coating film.

Afterward, a film-like polymeric solid electrolyte film was prepared by heat treatment at 100°C for one day.

**Example 12**

The polymeric solid electrolyte film was prepared in the same way as in Example 11, except that the weight ratio of PEG-POSS/LiTFSI to PEGDMA was 1:2.

**Example 13**

The polymeric solid electrolyte membrane was prepared in the same way as in Example 11, except that poly(ethylene glycol) diacrylate (PEGDA) was used instead of PEGDMA as a crosslinking agent.

**Example 14**

The polymeric solid electrolyte membrane was prepared in the same way as in Example 11, except that PEGDVE (poly(ethylene glycol) divinyl ether) was used instead of PEGDMA as a crosslinking agent.

**Comparative Example 10**

The method was the same as in Example 11, except that no crosslinking agent was used and no heat treatment was performed.

**Comparative Example 11**

The polymeric solid electrolyte was prepared in the same manner as in Example 11, except that no crosslinking agent was used.

**Comparative Example 12**

The polymeric solid electrolyte was prepared in the same way as in Example 11, except that PEG-POSS was not used.

**Experimental Example 3: Evaluation of the properties of a polymeric solid electrolyte (C)**

The polymeric solid electrolytes prepared in the Examples and Comparative Examples were tested for ionic conductivity and membrane state using the same method as in Experimental Example 1, and the results are shown in Table 6 below.

[Table 6]

| | Thickness (μm) | Ionic conductivity (S/cm, 25 °C) | Membrane Status |
|---|---|---|---|
| Example 11 | 94 | 4.15.E-05 | Solid membrane |
| Example 12 | 90 | 2.04.E-05 | Solid membrane |
| Example 13 | 45 | 1.82.E-05 | Solid membrane |
| Example 14 | 47 | 1.29.E-06 | Solid membrane |
| Comparative Example 10 | - | - | Liquid |
| Comparative Example 11 | - | - | Liquid |
| Comparative Example 12 | 22 | 7.21.E-09 | Solid membrane |

As shown in Table 6 above, Examples 11 to 14 all produced polymeric solid electrolytes prepared after heat treatment using a crosslinking agent with PEG-POSS. It can be seen that all of the polymeric solid electrolytes are in the form of solid membranes with excellent ionic conductivity.

In Comparative Examples 10 and 11, the solid crosslinking agent was not used, resulting in a liquid electrolyte.

In addition, in Comparative Example 12, a solid membrane electrolyte was prepared using a solid crosslinking agent without using PEG-POSS, but it was found to have poor ionic conductivity.

The present invention has been described above by limited examples and drawings, but the present invention is not limited thereby, and various modifications and variations may be made by one having ordinary skill in the art within the scope equivalent to the technical ideas of the present invention and the appended claims.

[Reference Numerals]

1: Polymeric solid electrolyte
10: Polyhedral oligomeric silsesquioxane with crosslinkable functional groups (CFG-POSS)
20: Liquid polyhedral oligomeric silsesquioxane (POSS)
30: Lithium salt
40: Solid crosslinking agent

## Claims

1. A polymeric solid electrolyte comprising (A), (B) or (C) below,

wherein the polymeric solid electrolyte comprising (A) or (B) has a crosslinking structure formed by crosslinking between the crosslinkable functional groups,
wherein the polymeric solid electrolyte comprising (C) has a crosslinking structure formed by a solid crosslinking agent:

(A) a polyhedral oligomeric silsesquioxane (POSS) containing a crosslinkable functional group (CFG), and a lithium salt;
(B) a polyhedral oligomeric silsesquioxane (POSS) containing a crosslinkable functional group (CFG) (CFG-POSS); a liquid polyhedral oligomeric silsesquioxane (POSS); and a lithium salt; and
(C) a liquid polyethyleneglycol-polyhedral oligomeric silsesquioxane (POSS); a solid crosslinking agent; and a lithium salt.

**2.** The polymeric solid electrolyte according to claim 1,
wherein the crosslinkable functional group of (A) comprises one or more selected from the group consisting of glycidyl (GL) and acrylo (AC).

**3.** The polymeric solid electrolyte according to claim 1,
wherein a polyhedral oligomeric silsesquioxane comprising the crosslinkable functional groups of (A) is comprised in an amount of 50% by weight to 95% by weight based on the total weight of the polymeric solid electrolyte.

**4.** The polymeric solid electrolyte according to claim 1,
wherein the lithium salt of (A) is comprised in an amount of 5% by weight to 50% by weight based on the total weight of the polymeric solid electrolyte.

**5.** The polymeric solid electrolyte according to claim 1,
wherein the crosslinkable functional group (CFG) of (B) comprises one or more selected from the group consisting of glycidyl (GL), acrylo (AC), allyl (AL), and methacryl (MA).

**6.** The polymeric solid electrolyte according to claim 1,
wherein the weight ratio of polyhedral oligomeric silsesquioxane (CFG-POSS) containing the crosslinkable functional groups of (B) to polyhedral oligomeric silsesquioxane (POSS) (CFG-POSS : POSS) is 0.05 : 1 to 1.5 : 1.

**7.** The polymeric solid electrolyte according to claim 1,
wherein the polyhedral oligomeric silsesquioxane (CFG-POSS) comprising the crosslinkable functional groups of (B) is comprised in an amount of 20 to 50% by weight based on the total weight of the polymeric solid electrolyte.

**8.** The polymeric solid electrolyte according to claim 1,
wherein the polyhedral oligomeric silsesquioxane (POSS) of (B) is included in an amount of 20 to 50% by weight based on the total weight of the polymeric solid electrolyte.

**9.** The polymeric solid electrolyte according to claim 1,
wherein the lithium salt is contained in an amount of 10 to 40% by weight based on the total weight of the polymeric solid electrolyte.

**10.** The polymeric solid electrolyte according to claim 1,
wherein the solid crosslinking agent of (C) comprises one or more selected from the group consisting of poly(ethylene glycol) diacrylate (PEGDA), polyethylene glycol) dimethacrylate (PEGDMA), and poly(ethylene glycol) divinyl ether (PEGDVE).

**11.** The polymeric solid electrolyte according to claim 1,
wherein the polyhedral oligomeric silsesquioxane of (C) is included in an amount of 20 to 60% by weight based on the total weight of the polymeric solid electrolyte.

**12.** The polymeric solid electrolyte according to claim 1,
wherein the solid crosslinking agent of (C) is comprised in an amount of 20 to 60% by weight, based on the total weight of the polymeric solid electrolyte.

**13.** The polymeric solid electrolyte according to claim 1,
wherein the lithium salt of (C) is included in an amount of 10 to 30% by weight based on the total weight of the polymeric solid electrolyte.

**14.** The polymeric solid electrolyte according to claim 1, which is in the form of a freestanding film.

**15.** The polymeric solid electrolyte according to claim 1, which further comprises a liquid electrolyte.

**16.** An all-solid-state battery comprising the polymeric solid electrolyte according to any one of claims 1 to 15.

**17.** The all-solid-state battery according to claim 16,

wherein the all-solid-state battery includes a positive electrode layer, a negative electrode layer, and a solid electrolyte layer formed between the positive electrode layer and the negative electrode layer,
wherein at least one of the positive electrode layer, negative electrode layer, and solid electrolyte layer comprises the polymeric solid electrolyte.

**18.** The battery module comprising the all-solid-state battery according to claim 17.

[FIG. 1]

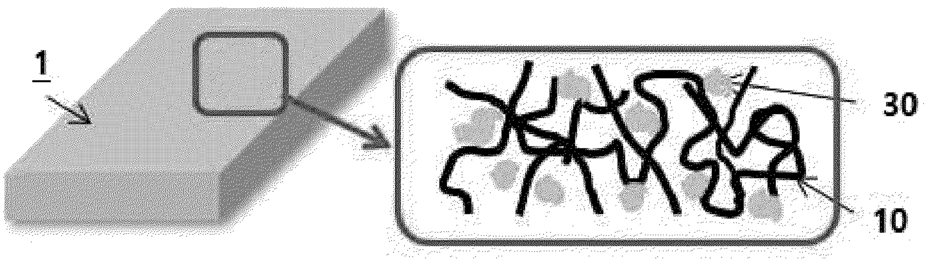


[FIG. 2]

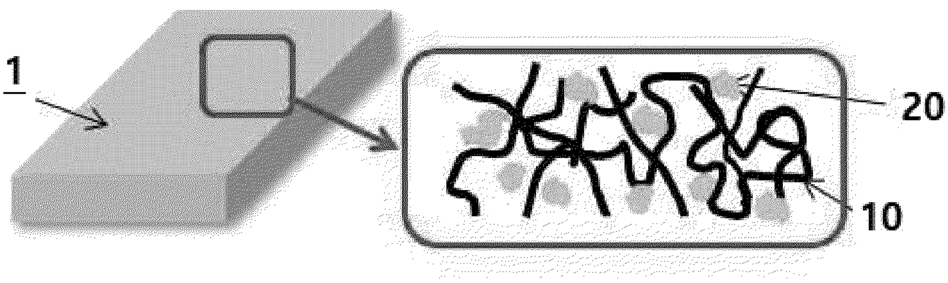


[FIG. 3]

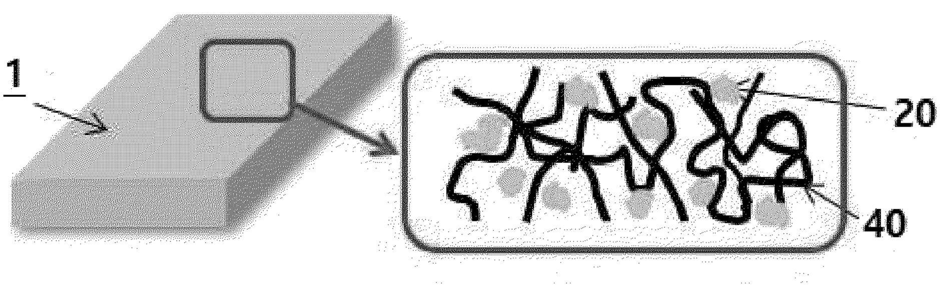

## INTERNATIONAL SEARCH REPORT

International application No.
**PCT/KR2023/016325**

**A. CLASSIFICATION OF SUBJECT MATTER**

**H01M 10/0565**(2010.01)i; **H01M 4/62**(2006.01)i; **H01M 10/0564**(2010.01)i; **H01M 10/052**(2010.01)i; **C08L 83/04**(2006.01)i; **C08K 5/00**(2006.01)i; **C08J 5/22**(2006.01)i

According to International Patent Classification (IPC) or to both national classification and IPC

**B. FIELDS SEARCHED**

Minimum documentation searched (classification system followed by classification symbols)

H01M 10/0565(2010.01); H01M 10/0525(2010.01); H01M 10/054(2010.01); H01M 10/058(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 가교결합 가능 기능기(crosslinkable functional group), 폴리헤드랄 올리고머형 실세스퀴옥산(polyhedral oligomeric silsesquioxane), 전고체 전지(all-state-solid battery)

**C. DOCUMENTS CONSIDERED TO BE RELEVANT**

| Category* | Citation of document, with indication, where appropriate, of the relevant passages | Relevant to claim No. |
|---|---|---|
| X | US 2018-0226679 A1 (PAN, Q. et al.) 09 August 2018 (2018-08-09) See claims 1, 4 and 7; paragraphs [0010], [0018] and [0027]-[0028]; and figures 1A and 1B. | 1-4,14-18 |
| Y | | 5,7-9 |
| A | | 6,10-13 |
| X | ZHOU, B. et al. Crosslinked poly(ethylene oxide)-based membrane electrolyte consisting of polyhedral oligomeric silsesquioxane nanocages for all-solid-state lithium ion batteries. Journal of power sources. 2020, vol. 449, article no. 227541, pp. 1-8. See abstract; and pages 2, 5 and 7. | 1,10-18 |
| Y | FEDELI, E. et al. Nanocomposite solid polymer electrolytes based on semiinterpenetrating hybrid polymer networks for high performance lithium metal batteries. Electrochimica acta. 2020, vol. 353, article no. 136481, pp. 1-10. See abstract; and page 2. | 5,7-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 January 2024** | **30 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/016325**

**C. DOCUMENTS CONSIDERED TO BE RELEVANT**

| Category* | Citation of document, with indication, where appropriate, of the relevant passages | Relevant to claim No. |
|---|---|---|
| A | CN 110994013 A (HUAZHONG UNIVERSITY OF SCIENCE AND TECHNOLOGY) 10 April 2020 (2020-04-10)<br>See entire document. | 1-18 |
| A | US 2022-0013807 A1 (LI, X. et al.) 13 January 2022 (2022-01-13)<br>See entire document. | 1-18 |
| A | US 2020-0153040 A1 (CORNELL UNIVERSITY) 14 May 2020 (2020-05-14)<br>See entire document. | 1-18 |

Form PCT/ISA/210 (second sheet) (July 2022)

**INTERNATIONAL SEARCH REPORT**
**Information on patent family members**

International application No.
**PCT/KR2023/016325**

| Patent document cited in search report | Publication date (day/month/year) | Patent family member(s) | Publication date (day/month/year) |
|---|---|---|---|
| US 2018-0226679 A1 | 09 August 2018 | US 10622671 B2 | 14 April 2020 |
| | | WO 2017-030811 A1 | 23 February 2017 |
| CN 110994013 A | 10 April 2020 | CN 110994013 B | 29 December 2020 |
| US 2022-0013807 A1 | 13 January 2022 | US 11848417 B2 | 19 December 2023 |
| US 2020-0153040 A1 | 14 May 2020 | US 11626617 B2 | 11 April 2023 |
| | | WO 2018-213447 A1 | 22 November 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220138008
- KR 1020220138012
- KR 1020220137997
- KR 20170046995